# FASCICULE DE BREVET EUROPEEN

(11) **EP 1 284 875 B1**
(45) Date de publication et mention de la délivrance du brevet: **07.07.2004**
(21) Numéro de dépôt: 01921376.8
(22) Date de dépôt: 19.04.2001
(51) Int. Cl.: B60C 15/06, B60C 15/024

(54) **BOURRELET ALLEGE DE PNEUMATIQUE**
LEICHTWULST FÜR REIFEN
LIGHTENED TYRE BEAD

(30) Priorité: 25.04.2000 FR 0005343
(43) Date de publication de la demande: 26.02.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: FERLIN, Olivier, Saint-Gènes-l'Enfant, 63200 Malauzat (FR)
(74) Mandataire: Diernaz, Christian
(86) Numéro de dépôt international: PCT/EP2001/004427
(87) Numéro de publication internationale: WO 2001/081103

(56) Documents cités:
- FR-A- 2 406 530
- LU-A- 87 296
- US-A- 4 120 338
- PATENT ABSTRACTS OF JAPAN vol. 016, no. 044 (M-1207), 4 février 1992 (1992-02-04) & JP 03 248903 A (SUMITOMO RUBBER IND LTD), 6 novembre 1991 (1991-11-06)
- PATENT ABSTRACTS OF JAPAN vol. 1998, no. 13, 30 novembre 1998 (1998-11-30) & JP 10 211806 A (BRIDGESTONE CORP), 11 août 1998 (1998-08-11)

## Description

La présente invention concerne un pneumatique à armature de carcasse radiale, plus particulièrement destiné à être monté sur une jante de type 'Poids-Lourds' dont les sièges sont inclinés par rapport à l'axe de rotation avec un angle α, tel que 0° ≤ α ≤ 6°.

Les dites jantes présentent la particularité d'avoir des rebords de jante relativement hauts selon les normes en vigueur (TRA, ETRTO, JATMA), et les pneumatiques qui utilisent de telles jantes sont généralement des pneumatiques qui se montent avec une chambre à air accompagnée d'un flap disposé entre les parois intérieures des deux bourrelets du pneumatique.

Les dits bourrelets comportent chacun de manière connue une tringle, généralement de type 'tressée', autour de laquelle est ancrée par enroulement une armature de carcasse d'éléments de renforcement métalliques, en formant un retournement dont la hauteur mesurée par rapport à la base du bourrelet est supérieure à la hauteur du rebord de jante. Ledit retournement est renforcé axialement à l'extérieur par une armature additionnelle à éléments métalliques orientés par rapport à la direction circonférentielle à un faible angle, pouvant être compris entre 5° et 30°. Ladite armature est enroulée autour de la tringle d'ancrage et forme deux brins : un brin axialement extérieur, dont l'extrémité est légèrement située radialement au-dessus de l'extrémité du retournement d'armature de carcasse, et un brin axialement intérieur dont l'extrémité est généralement située au-dessous d'une droite parallèle à l'axe de rotation et passant par le sommet du rebord de jante.

Ladite armature additionnelle a pour fonction principale de minimiser les mouvements dans les trois dimensions d'une part de l'extrémité de retournement d'armature de carcasse et d'autre part de la couche de mélange caoutchouteux de protection, dite aussi protecteur, et qui entoure la surface du bourrelet devant être en contact avec la jante de service.

Toute armature de renforcement quelle soit formée d'éléments métalliques ou d'autres éléments, est coûteuse, et de nombreuses recherches ont été réalisées en vue de pouvoir supprimer l'armature de renforcement de bourrelet, sans pour cela affecter les propriétés fondamentales du bourrelet de pneumatique qui est d'assurer le maintien dudit pneumatique sur sa jante de service quelles que soient les conditions de roulage et pendant une durée la plus longue possible, ce qui exige pour toute solution d'excellentes propriétés d'endurance et de résistance à l'usure sur jante.

Le problème de la résistance à l'usure des rebords de jante, du fait des flexions répétées du pneumatique et des mouvements entre bourrelets et rebords de jante, semblait avoir été résolu par l'adoption, pour la surface extérieure du bourrelet, d'un profil méridien adapté, ledit profil consistant en une première partie courbée devant prendre et rester en contact permanent avec la surface du rebord de jante, ladite première partie présentant à sa jonction avec une deuxième partie courbée une discontinuité de courbure franche, deuxième partie dont le profil méridien est tel qu'elle ne peut en aucun cas entrer en contact avec la surface du rebord de jante. La discontinuité entre deux courbes peut être définie géométriquement comme étant l'angle aigu, vu en section méridienne, fait par les tangentes au point de jonction respectivement aux deux courbes. La discontinuité est franche si ledit angle est au moins égal à 35°. Une telle solution est montrée et décrite dans le brevet FR-A-2 406 530. Elle s'est avérée insuffisante à compenser le manque de résistance à l'usure du bourrelet, manque occasionné par l'absence d'armature de renforcement additionnelle de bourrelet.

Afin de compenser ledit manque de résistance à l'usure, le pneumatique, destiné à être monté sur une jante dont les sièges font avec l'axe de rotation un angle compris entre 0° et 6°, et comprenant une armature de carcasse radiale ancrée dans chaque bourrelet à une tringle en formant un retournement, ladite tringle étant radialement surmontée, axialement entre la partie principale d'annature et son retournement, d'au moins un profilé de mélange caoutchouteux de forme sensiblement triangulaire et de dureté Shore A élevée, est caractérisé en ce que le profil méridien de la surface axialement extérieure de chaque bourrelet, composée d'une première partie courbe destinée à entrer en et à rester en contact permanent avec le rebord de jante, et présentant avec une deuxième partie courbe une discontinuité franche de courbure, est combiné à la présence d'un profilé de mélange caoutchouteux de hauteur H_{L}, radialement au-dessus de la tringle et axialement entre la partie principale d'armature de carcasse et son retournement, de sorte que ledit profilé soit axialement en contact sur toute sa hauteur avec le retournement d'armature de carcasse, et séparé de la partie principale de ladite armature par un profilé de mélange caoutchouteux de dureté faible, un troisième profilé de mélange caoutchouteux de dureté faible étant disposé axialement à l'extérieur du retournement d'armature de carcasse entre le protecteur qui recouvre axialement à l'extérieur le bourrelet B et ledit retournement.

On entend par mélange caoutchouteux de dureté Shore A élevée un mélange dont la dureté est au moins égale à 85 points.

On entend par mélange caoutchouteux de dureté Shore A faible un mélange dont la dureté est au plus égale à 60 points.

De manière connue, le profilé de caoutchouc radialement au-dessus de la tringle est généralement tel que son extrémité supérieure est accolée à la partie principale de l'armature de carcasse, de sorte que ledit profilé ne soit pratiquement pas en contact avec le retournement de ladite armature. L'invention emploie un positionnement inverse, l'extrémité supérieure du profilé étant accolée au retournement, et cette inversion de positionnement du profilé de mélange caoutchouteux à forte dureté, permettant, en combinaison avec le profil méridien de la surface extérieure du bourrelet, la suppression de l'armature additionnelle de renforcement usuelle, et donc un prix de revient abaissé sans que le pneumatique soit pénalisé en endurance et usure du bourrelet.

La résistance à l'usure du protecteur de bourrelet et l'endurance du bourrelet peuvent être avantageusement améliorées par la présence d'un troisième profilé de mélange de dureté Shore A faible, inférieure aux duretés de même nom des profilés entre armature de carcasse et retournement, et au plus égale à 55 points.

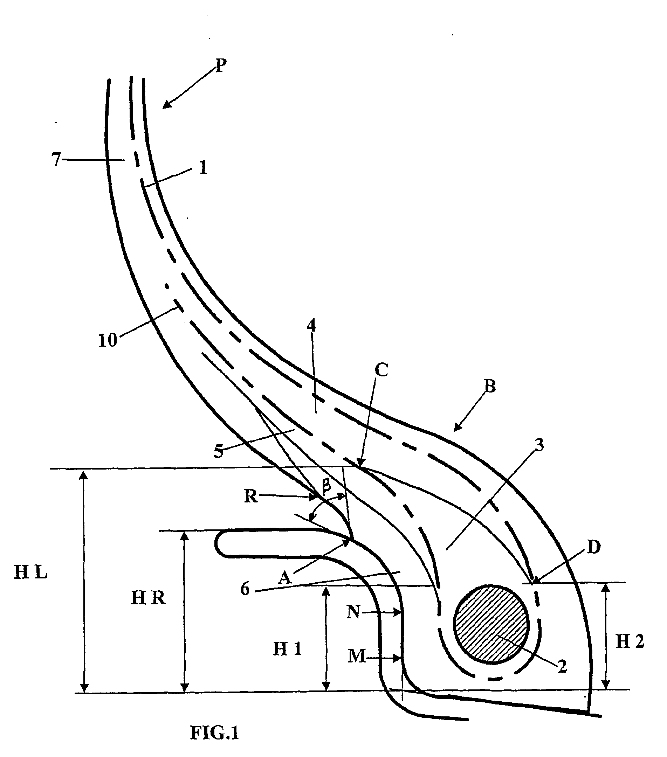

Les caractéristiques de l'invention seront mieux comprises à l'aide de la description qui suit et qui se réfère au dessin, illustrant à titre non limitatif des exemples d'exécution, et sur lequel la figure unique 1 représente schématiquement une structure de pneumatique, conforme à l'invention.

Le pneumatique P, de dimension 12 00. R. 24, est destiné à être monté sur une jante 8.50-24 dont les sièges sont inclinés par rapport à l'axe de rotation de ladite jante d'un angle de 5°. Ledit pneumatique comprend une bande de roulement (non montrée) réunie à deux bourrelets B par l'intermédiaire de deux flancs 7, et est renforcé d'une part par une armature de sommet (non montrée) et d'autre part par une armature de carcasse, qui, dans le cas décrit, est formée d'une seule nappe 1 de câbles métalliques en acier. Ladite nappe 1 est ancrée dans chaque bourrelet B par enroulement autour d'une tringle 2 et en formant un retournement 10, dont l'extrémité est située à une distance radiale de la base du bourrelet sensiblement égale à 30% de la hauteur du pneumatique P (on entend par base du bourrelet, vue en section méridienne, la droite parallèle à l'axe de rotation passant par le point d'intersection de la génératrice du siège de bourrelet avec la droite du rebord de bourrelet, droite perpendiculaire à l'axe de rotation). Radialement au-dessus de la tringle 2 et axialement entre la partie non retournée de la nappe de carcasse 1 et de son retournement 10, est disposé un premier profilé 3 de mélange caoutchouteux de dureté Shore A égale à 97. De forme sensiblement triangulaire et de hauteur H_{L}, mesurée par rapport à la base du bourrelet et nettement supérieure à la hauteur H_{R} du rebord de jante, ledit profilé a son extrémité radialement supérieure C accolée au retournement 10 et se trouve donc en contact avec ledit retournement sur toute l'étendue de sa hauteur, alors que l'extrémité C est séparée de la partie non retournée de nappe de carcasse par un deuxième profilé 4 de mélange caoutchouteux de dureté Shore A moindre puisque égale à 56. La forme du dit profilé 4 est telle que son extrémité radialement inférieure D est située à une distance radiale H₂ de la base du bourrelet inférieure à la hauteur H_{R} et de sorte que la face axialement intérieure du profilé 3 soit, sur une très faible hauteur, en contact avec la partie non retournée de la nappe 1 de carcasse. L'extrémité radialement supérieure du profilé 4 est radialement située au-dessus de l'extrémité du retournement 10 de nappe de carcasse. Le bourrelet B est recouvert extérieurement d'une couche protectrice 6 ou protecteur, de mélange caoutchouteux de forte dureté, protecteur qui assure le contact avec les sièges et rebord de la jante de service. Ledit protecteur 6 est en contact avec le retournement 10 de nappe de carcasse 1 sur la hauteur H₁ pour se trouver ensuite séparé du dit retournement par un troisième profilé 5 de mélange caoutchouteux de faible dureté Shore A, au plus égale à 55 et dans le cas décrit égale à 47. Sous forme de lentille, ledit profilé 5 s'étend radialement sur une hauteur telle qu'il recouvre l'extrémité du retournement 10. Quant au profil méridien de la surface axialement extérieure du bourrelet B et du flanc 7, il est composé d'un segment de droite MN perpendiculaire à l'axe de rotation prolongé radialement à l'extérieur par un arc de cercle NA concave, la portion MA devant être en contact permanent avec le rebord de jante. Le point A est le point de discontinuité franche avec l'arc de cercle AR concave et qui prolonge radialement à l'extérieur l'arc NA, ledit arc AR n'entrant jamais en contact avec le rebord de jante. L'arc AR tangente radialement à l'extérieur l'arc de cercle convexe de flanc 7. Au point A, les tangentes respectivement aux arcs de cercle NA et AR font entre elles un angle aigu β égal à 40°.

## Revendications

1. Pneumatique P, destiné à être monté sur une jante dont les sièges font avec l'axe de rotation un angle compris entre 0° et 6°, et comprenant une armature de carcasse radiale (1) ancrée dans chaque bourrelet B à une tringle (2) en formant un retournement (10), ladite tringle (2) étant radialement surmontée, axialement entre la partie principale d'armature (1) et son retournement (10), d'au moins un profilé (3) de mélange caoutchouteux de forme sensiblement triangulaire et de dureté Shore A élevée au moins égale à 85 points, la surface axialement extérieure de chaque bourrelet B, étant composée d'une première partie courbe NA destinée à entrer en et à rester en contact permanent avec le rebord de jante, et présentant avec une deuxième partie courbe AR une discontinuité franche de courbure, **caractérisé en ce que** le profil méridien de ladite surface est combiné à la présence d'un profilé (3) de mélange caoutchouteux de hauteur H_{L}, de sorte que ledit profilé (3) soit axialement en contact sur toute sa hauteur avec le retournement (10) d'armature de carcasse (1), et séparé de la partie principale de ladite armature (1) par un profilé (4) de mélange caoutchouteux de dureté faible au plus égale à 60 points, un troisième profilé (5) de mélange caoutchouteux de dureté Shore A faible, inférieure aux duretés de même nom des profilés entre armature de carcasse et retournement étant disposé axialement à l'extérieur du retournement (10) d'armature de carcasse (1) entre le protecteur (6) qui recouvre axialement à l'extérieur le bourrelet B et ledit retournement (10).

2. Pneumatique selon la revendication 1, **caractérisé en ce que** le troisième profilé (5) de mélange caoutchouteux a une dureté Shore A inférieure aux duretés de même nom des profilés (3, 4) entre armature de carcasse (1) et retournement (10) et au plus égale à 55 points.

## Patentansprüche

1. Luftreifen P, der dazu bestimmt ist, auf eine Felge montiert zu werden, deren Sitze mit der Drehachse einen Winkel zwischen 0° und 6° bilden, und der eine Radialkarkassenbewehrung (1) aufweist, die in jedem Wulst B unter Bildung eines Umschlags (10) an einem Wulstkem (2) verankert ist, wobei radial über dem Wulstkern (2) axial zwischen dem Hauptbereich der Bewehrung (1) und ihrem Umschlag (10) mindestens ein Profilteil (3) aus einer Kautschukmischung von im wesentlichen dreieckiger Form und mit hoher Shore-A-Härte mindestens gleich 85 Punkten sitzt, wobei die axial äußere Fläche jedes Wulsts B aus einem ersten gekrümmten Bereich NA besteht, der dazu bestimmt ist, mit dem Felgenrand in Kontakt zu kommen und in permanentem Kontakt damit zu bleiben, und mit einem zweiten gekrümmten Bereich AR eine deutliche Krümmungsunterbrechung aufweist, **dadurch gekennzeichnet, dass** das Meridianprofil der Fläche mit dem Vorhandensein eines Profilteils (3) aus einer Kautschukmischung einer Höhe H_{L} derart kombiniert ist, dass das Profilteil (3) axial über seine ganze Höhe mit dem Umschlag (10) der Karkassenbewehrung (1) in Kontakt steht und vom Hauptbereich der Bewehrung (1) durch ein Profilteil (4) aus einer Kautschukmischung mit geringer Härte höchstens gleich 60 Punkten getrennt wird, wobei ein drittes Profilteil (5) aus einer Kautschukmischung mit einer geringen Shore-A-Härte, die unter den Härten gleichen Namens der Profilteile zwischen der Karkassenbewehrung und dem Umschlag liegt, axial außerhalb des Umschlags (10) der Karkassenbewehrung (1) zwischen dem Schutz (6), der den Wulst B axial außen bedeckt, und dem Umschlag (10) angeordnet ist.

2. Luftreifen nach Anspruch 1, **dadurch gekennzeichnet, dass** das dritte Profilteil (5) aus einer Kautschukmischung eine Shore-A-Härte aufweist, die unter den Härten gleichen Namens der Profilteile (3, 4) zwischen der Karkassenbewehrung (1) und dem Umschlag (10) liegt und höchstens gleich 55 Punkte ist.

## Claims

1. A tyre P, which is intended to be mounted on a rim, the seats of which form an angle with the axis of rotation of between 0° and 6°, and comprises a radial carcass reinforcement (1) anchored within each bead B to a bead wire (2) so forming an upturn (10), said bead wire (2) being radially surmounted, axially between the main portion of the reinforcement (1) and its upturn (10), by at least one rubber mix profile (3) substantially triangular in form and of an elevated Shore A hardness at least equal to 85 points, the axially outer surface of each bead B being composed of a first curved portion NA intended to enter into and remain in permanent contact with the rim flange and exhibiting with a second curved portion AR an abrupt discontinuity of curvature, **characterised in that** the meridian profile of said surface is combined with the presence of a rubber mix profile (3) of the height H_{L}, in such a way that said profile (3) is axially in contact over its entire height with the upturn (10) of the carcass reinforcement (1) and separated from the main portion of said reinforcement (1) by a rubber mix profile (4) of a low hardness at most equal to 60 points, a third rubber mix profile (5) of a low Shore A hardness, lower than the hardnesses of the same type of the profiles between carcass reinforcement and upturn, being disposed axially to the outside of the upturn (10) of the carcass reinforcement (1) between the protector (6) which covers the bead B axially to the outside and said upturn (10).

2. A tyre according to claim 1, **characterised in that** the third rubber mix profile (5) has a Shore A hardness lower than the hardnesses of the same type of the profiles (3, 4) between carcass reinforcement (1) and upturn (10), and at most equal to 55 points.
